# EUROPÄISCHE PATENTSCHRIFT

(11) **EP 1 712 517 B1**
(45) Veröffentlichungstag und Bekanntmachung des Hinweises auf die Patenterteilung: **11.11.2015**
(21) Anmeldenummer: 05106614.0
(22) Anmeldetag: 19.07.2005
(51) Int. Cl.: C01B 3/06, B01J 19/12, B01J 19/24

(54) **GAS-FESTPHASENREAKTION**
GAS-SOLID PHASE REACTION
RÉACTION ENTRE UN GAZ ET UNE PHASE SOLIDE

(30) Priorität: 14.04.2005 DE 102005017216
(43) Veröffentlichungstag der Anmeldung: 18.10.2006
(73) Patentinhaber: Chemical Process Engineering Research Institute, 57001 Thessaloniki (GR)
(72) Erfinder: Roeb, Martin, Dr., 53639 Königswinter (DE); Sattler, Christian, Dr., 53225 Bonn (DE); Rietbrock, Peter-Michael, Dipl.-Ing., 51147 Köln (DE); Klüser, Ruth, Dr., 53229 Bonn (DE); Konstandopoulos, Athanasios G., Dr., Thessaloniki 54352 (GR); Agrafiotis, Christos, Dr., Thessaloniki 54632 (GR)
(74) Vertreter: Von Kreisler Selting Werner - Partnerschaft von Patentanwälten und Rechtsanwälten mbB

(56) Entgegenhaltungen:
- DE-A1- 2 649 164
- FR-A- 926 020
- US-B1- 6 291 686
- KODAMA T ET AL: "Thermochemical hydrogen production by a redox system of ZrO2-supported Co(II)-ferrite" SOLAR ENERGY, PERGAMON PRESS. OXFORD, GB, Bd. 78, Nr. 5, Mai 2005 (2005-05), Seiten 623-631, XP004852079 ISSN: 0038-092X
- TAMAURA Y ET AL: "Oxygen-releasing step of ZnFe2O4/(ZnO+Fe3O4)-system in air using concentrated solar energy for solar hydrogen production" SOLAR ENERGY, PERGAMON PRESS. OXFORD, GB, Bd. 78, Nr. 5, Mai 2005 (2005-05), Seiten 616-622, XP004852078 ISSN: 0038-092X
- AGRAFIOTIS ET AL: "Solar water splitting for hydrogen production with monolithic reactors" SOLAR ENERGY, PERGAMON PRESS. OXFORD, GB, Bd. 79, Nr. 4, Oktober 2005 (2005-10), Seiten 409-421, XP005082271 ISSN: 0038-092X

## Beschreibung

Die Erfindung betrifft ein Verfahren und einen Reaktor zur quasikontinuierlichen Durchführung einer chemischen Reaktion an einer Oberfläche eines fixierten Reaktionspartners in einer gas-festphasigen Reaktion.

Wasserstoff ist langfristig gesehen ein bedeutender Träger für eine nachhaltige Energieversorgung. Heute wird der größte Teil des Wasserstoffs aus fossilen Quellen hergestellt. Allerdings erfordern das begrenzte Vorhandensein dieser Quellen sowie die unerlässliche Reduktion der Treibhausgase (vorwiegend CO₂) die Erschließung alternativer Ressourcen beziehungsweise Verfahren. Die Wasserspaltung mit Hilfe von Elektrolyse unter Einsatz von Solarstrom ist möglich, hat aber den Nachteil des enormen Einflusses der Solarstromkosten auf die H₂-Herstellung. Die direkte Nutzung konzentrierter Solarstrahlung für die thermochemische Wasserspaltung vermeidet dies und hat einen höheren Wirkungsgrad. So können die Kosten der Wasserstoffproduktion gesenkt und langfristig eine großtechnische Herstellung ermöglicht werden.

Zur thermischen Herstellung von Wasserstoff stehen eine Reihe von Verfahren zur Verfügung.

So wird in DE 44 10 915 A1 Wasserstoff durch die Reaktion von Eisen mit Kohlensäure unter solarthermischer Energiezugabe gebildet. Das gebildete Eisenoxid wird mittels Kohlenmonoxid wieder reduziert und steht dem Prozess zur Verfügung.

In DE 42 26 496 A1 wird Wasserstoff in einem modifizierten kontinuierlichen Eisen-Wasserdampf-Prozess erzeugt, das hierbei entstehende Eisenoxid wird anschließend der Stahlerzeugung wieder zugeführt.

JP 03205302 A beschreibt die Herstellung von hochreinem Wasserstoff mittels aktiviertem Magnetit als reaktivem Katalysator.

In JP 2001270701 A wird Wasserstoff hergestellt, indem metallisches Zink, Magnetit und Wasser miteinander bei 600°C reagiert werden.

M. Inoue et al. aus Solar Energy (2003) beschreibt die Herstellung von Wasserstoff mittels eines Wasser-ZnO-MnFe₂SO₄-System. Das entsprechende Ferritpulver des Typs Mₓ²⁺Zn₁₋ₓ²⁺ Fe₂SO₄ kann nach der Methode von S. Lorentzou et al. präsentiert auf der Konferenz Partec 2004 hergestellt werden.

Nach einer Pressemitteilung des Deutschen Zentrums für Luft- und Raumfahrt vom 15.10.2004 wurde im Sonnenofen erstmals Wasserstoff durch solar-thermische Wasserspaltung erzeugt. Bei dem beschriebenen Verfahren wird der Wasserstoff diskontinuierlich erzeugt, indem der Wasserdampf über Metalloxid gespalten und das Metalloxid regeneriert wird.

DE 197 10 986 C2 beschreibt einen volumetrischen Strahlungsempfänger zur Wärmegewinnung aus konzentrierter Strahlung in dem ein Fluid unter Druck erhitzt wird, ohne dass in diesem Reaktor eine chemische Reaktion stattfindet.

FR 926020 A betrifft ein Verfahren zur Herstellung von Wasserstoff aus Wasser unter Verwendung von Eisenoxid und Kohle als Wärmequelle.

US 6,291,686 B1 offenbart ebenfalls ein Verfahren zur Oxidation eines gasförmigen Reaktanten, in diesem Fall Butan. Der Reaktor weist ein Reaktionsbett auf, das in dem Reaktor rotiert und wobei das Reaktionsbett durch verschiedene Reaktionszonen geführt wird, wobei die Positionen jeweils innerhalb des Reaktors klar definiert sind.

DE 26 49 164 A1 offenbart ein Verfahren zur Umwandlung von Wasser in Wasserstoff. Gemäß dem letzten Absatz auf S. 6 findet die Oxidationsreaktion in einer bestimmten Reaktionskammer statt, wonach das Molybdän- oder Eisenoxid in einen anderen Reaktor transferiert wird, um Wasserstoff zu erzeugen.

T. Kodama et al., Solar Energy 78 (2005) 623-631 beschreibt ein Verfahren zur solarthermischen Herstellung von Wasserstoff durch Einsatz von Ferriten und beleuchtet die Thermochemie der Redoxreaktion in einer Reaktionskammer.

Yutaka Tamura et al. Solar Energy 78 (2005) 616-622 beschreibt. ebenfalls ein Verfahren zur solarthermischen Herstellung von Wasserstoff durch Einsatz von Ferriten und beleuchtet die Thermochemie der Redoxreaktion in einer Reaktionskammer.

Aufgabe der vorliegenden Erfindung ist es also, ein Verfahren zur Herstellung von Wasserstoff aus Wasserdampf bereitzustellen, welches insbesondere in einem Reaktionskammersystem durchgeführt werden kann, bei dem kein Feststoff separiert werden muss und das bei möglichst niedrigen Temperaturen quasikontinuierlich abläuft. Weitere Aufgabe ist es, einen solarbetriebenen Reaktor bereitzustellen, in dem ein Produkt kontinuierlich hergestellt wird, obgleich mindestens zwei Prozessstufen (beispielsweise Spaltung und Regenerierung) notwendigerweise sequenziell ablaufen.

Diese der Erfindung zugrunde liegende Aufgabe wird gelöst in einer ersten Ausführungsform durch ein Verfahren, wie in Anspruch 1 definiert.

Sequenzielle Schritte im Sinne der Erfindung sind aufeinander folgende Reaktionsschritte der chemischen Reaktion, bei denen die Reaktionsprodukte isolierbar sind.

Reversible Schritte im Sinne der Erfindung sind Reaktionsschritte, bei denen das chemische Gleichgewicht so eingestellt werden kann, das wahlweise entweder die Hin- oder die Rückreaktion bevorzugt abläuft.

Eine chemische Reaktion ist im Prinzip jede chemische Reaktion, bei der einer der Reaktionspartner fixiert wird und bei der die Energie als Wärmeenergie, Lichtenergie, Nuklearenergie oder in Form anderer elektromagnetischer Strahlung zugeführt wird. Beispielhafte Reaktionstypen sind der folgenden Tabelle zu entnehmen:

| Reaktionstyp | Erster Schritt | Zweiter Schritt |
|---|---|---|
| H₂ - Produktion | MeOₓ + H₂O → H₂ + MeO_{y} | MeO_{y} → MeOₓ +O₂ |
| Reduktion von Kohlendioxid | MeOₓ +CO₂ → MeO_{y} +CO | MeO_{y} → MeO + ½ O₂ |
| Spaltung von Stickoxiden | MeOₓ + NOₓ → MeO_{y} + ½ N₂ | MeO_{y} → MeOₓ + ½ O₂ |
| Spaltung von SO₃ / Produktion von SO₂ | MeOₓ + SO₃ → MeO_{y} + SO₂ | MeO_{y} → MeOₓ + ½ O₂ |
| Selektive Oxidation | MeOₓ + O₂ → MeO_{y} | CₘHₙ + MeO_{y} → MeOₓ +CₘHₙO |
| Dehydrierungen | MeOₓ + O₂ → MₑO_{y} | CₘHₙ + MeO_{y} → MeOₓ +CₘHₙ₋₂ +H₂O |
| H₂ - Produktion | Me + H₂O → H₂ + MeO | MeO → Me + ½ O₂ |
| H₂ - Produktion | MX_{y} + HX → MX_{y+1} + ½ H₂ | MX_{y+1} → MX_{y} + ½ X₂ |

Hierbei steht Me für ein Metallatom, X für ein Halogen oder Pseudohalogen, tiefgestellte Indices n, m, x oder y für ganze positive Zahlen.

Bei dem erfindungsgemäßen Verfahren der Herstellung von Wasserstoff läuft über den gesamten Reaktionszeitraum eines ersten sequenziellen Schrittes diechemische Reaktion in einer ersten Reaktionskammer hinweg in einer davon unterschiedlichen zweiten Reaktionskammer zu mindestens einem Zeitpunkt ein von dem ersten sequenziellen Reaktionsschritt unterschiedlicher zweiter sequenzieller Reaktionsschritt ab. Dadurch wird erreicht, dass zu jedem Zeitpunkt das Endprodukt durch das Verfahren bereitgestellt werden kann und die Reaktionskammern optimal ausgenutzt werden.

Da die unterschiedlichen sequenziellen Reaktionsschritte eine unterschiedliche Reaktionszeit aufweisen können, kann für eine optimale Auslastung der Reaktionskammern vorteilhafterweise
a) der Energieeintrag in den Reaktionskammern zur Anpassung der Reaktionsgeschwindigkeit unterschiedlich gestaltet werden,
b) der Massenstrom der Reaktionspartner angepasst werden, und/oder
c) die Anzahl der Reaktionskammern entsprechend den Reaktionszeiten angepasst werden, in denen die Reaktionen entsprechend zeitversetzt ablaufen.

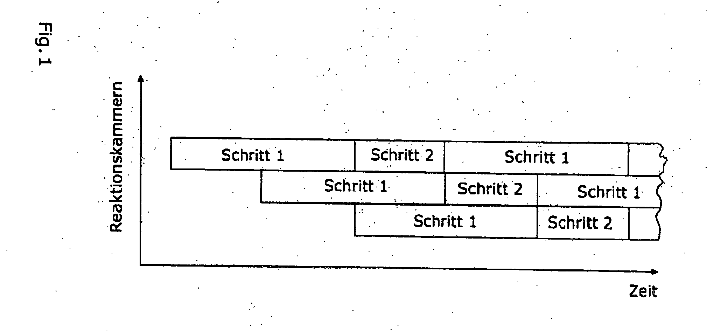

Letztere Variante wird anhand der Fig. 1 näher veranschaulicht. Beispielhaft ist in Fig. 1 dargestellt, wie bei zwei Reaktionsschritten, bei denen der zweite Reaktionsschritt doppelt so lange dauert wie der erste Reaktionsschritt, mit drei Reaktionskammern ein erfindungsgemäßes, quasikontinuierliches Verfahren betrieben werden kann.

Bei dem erfindungsgemäßen Verfahren werden vorzugsweise alle reversiblen Reaktionsschritte der chemischen Reaktion in denselben Reaktionskammern sequenziell durchgeführt. Eine Separierung oder Isolierung von Zwischenprodukten kann somit entfallen.

Bei demerfindungsgemäßen Verfahren setzt man als Reaktionskammern strahlungsbeheizte Reaktoren ein. Dadurch können mit Lichtenergie thermische Reaktionen durchgeführt werden. Erfindungsgemäß können vorteilhafterweise bei der Durchführung des Verfahrens auch Photoreaktionen stattfinden. Prinzipiell thermische Reaktionen können erfindungsgemäß auch insbesondere photoassistiert ablaufen. Photoassistiert im Sinne der Erfindung heißt, dass das Reaktionsprodukt durch eine Photoreaktion verstärkt gebildet wird.

Man stellt die zyklisch abwechselnden Reaktionsbedingungen durch einen zyklischen Wechsel der Temperatur der Reaktionskammern durch Variation der Heizleistung ein.

Die erforderliche Temperatur in den Reaktionskammern wird durch einen zyklischen Wechsel der Heizleistung variiert, womit ein quasikontinuierlicher Produktstrom ermöglicht wird. Die unterschiedliche thermische Ansteuerung der Reaktoren ermöglicht die gleichzeitige Reaktion der Wasserspaltung bei niedrigerer Temperatur und die Regeneration bei höherer Temperatur. Die Aneinanderreihung dieser verschiedenen Batch-Prozesse gewährleistet somit eine quasikontinuierliche Wasserstoffproduktion.

Vorteilhafterweise wird das Verfahren in mehreren aufeinanderfolgenden Zyklen quasikontinuierlich reproduzierbar durchgeführt. Ein Zyklus dauert dabei beispielsweise eine Zeitspanne in einem Bereich von 0,3 bis 1,5 h, insbesondere 0,3 bis 1 h. Dies hat gegenüber einem diskontinuierlichen Verfahren vor allem ökonomische Vorteile. Die Zyklen können dabei jedoch je nach durchzuführender Reaktion aber auch wesentlich kürzer oder auch länger sein.

Weiterhin wird in diesem Verfahren entsprechend des unterschiedlichen Energiebedarfs der beteiligten, sequenziell durchzuführenden Reaktionen ein zyklischer Wechsel der Temperatur des fixierten Reaktionspartners (beispielsweise des Metalloxids) durch Variation der Heizleistung eingestellt, weil beispielsweise zuerst die Spaltung und anschließend die Regeneration stattfinden soll.

Vorteilhaft ist es, wenn die absorbierte Energie des optischen Bauteils (bevorzugt ein Abschwächer) zur Erwärmung von Fluiden genutzt wird. Diese Fluide können unter anderem Reaktionspartner, Hilfsstoffe oder Wärmeträgermedien sein. Mit der Vorwärmung benötigen die Fluide nicht mehr so viel Strahlungsleistung im Reaktorraum. Hierbei ist es besonders bevorzugt, wenn das optische Bauteil ein Rohrbündel ist, das vom Fluid durchflossen ist.

Der Energieeintrag findet durch Lichtenergie auskonzentrierter Sonnenstrahlung statt, da diese Energiequelle besonders kostengünstig verfügbar ist und sowohl für thermische als auch gleichermaßen für Photoreaktionen geeignet ist.

Die Erzeugung der erforderlichen Temperatur mittels Lichtenergie ist von Vorteil, weil konventionelle Energieerzeugungssysteme durch Verbrennung von fossiler Energie nicht so ressourcenschonend wie das erfindungsgemäße Verfahren sind und Lichtenergie wie Sonnenlicht weltweit zur Verfügung steht.

Mit Hilfe optischer Anordnungen wird Sonnenlicht in die Reaktionskammer eingestrahlt um die erforderliche Temperatur zu erzeugen. Diese optischen Anordnungen haben besonders bevorzugte Erscheinungsformen wie Solarturmsysteme, Paraboloid-Konzentratoren, Sonnenöfen, elliptische oder sphärische Spiegel oder linienfokussierende Konzentratoren. Mittels solar-thermochemischer Wasserspaltung kann Wasserstoff dadurch als ein möglicher Energieträger der Zukunft ohne klimaschädliche Emission von Kohlendioxid in großtechnischem Maßstab erzeugt werden.

Vorteilhafterweise wird also als Energiequelle ein konzentrierendes solarthermisches System wie ein Solarturmsystem, ein Paraboloid-Konzentrator, ein Sonnenofen, ein elliptischer oder sphärischer Spiegel oder ein linienfokussierender Konzentrator eingesetzt.

Die erforderliche Strahlungsleistung wird bevorzugt durch eine Gruppe von Heliostaten erreicht und die zur Regeneration erforderliche Strahlungsleistung durch eine weitere Gruppe von Heliostaten erreicht, wobei der Fokus der zweiten Gruppe auf die einzelnen Reaktionsfelder umgestellt wird. Hierbei wird das Heliostatenfeld derat separiert, dass mindestens eine Gruppe von Heliostaten die Grundlast an notwendiger Strahlungsleistung entsprechend dem Reaktionsschritt mit dem geringsten Energiebedarf deckt, indem sie "regulär" dem Tagesgang der Sonne nahgeführt wird, und dass mindestens eine Gruppe von Heliostaten Zusatzlasten an notwendiger Strahlungsleistung für Reaktionsschritte mit höherem Energiebedarf deckt, indem der Fokus dieser Gruppe in bestimmten Zeitabständen jeweils nach Beendigung des jeweiligen Reaktionsschritts auf einen anderen Bereich des Strahlungsempfängers gelenkt wird. Dadurch können leicht zwei unterschiedliche Reaktionstemperaturen realisiert werden.

Vorteilhafterweise verschiebt man die Reaktionskammern relativ zur Strahlungsquelle um die Heizleistung zu variieren. Hiermit kann eine Veränderung der Temperatur bei gleicher Strahlungsleistung unkompliziert stattfinden. Die Reaktionskammern können also vorzugsweise relativ zur optischen Anordnung veränderbar sein um die Heizleistung zu variieren. Hiermit kann eine Veränderung der Temperatur bei gleicher Strahlungsleistung unkompliziert stattfinden.

Zur Variation der solarthermischen Heizleistung eignet sich vorteilhafterweise das Verwenden optischer Bauteile zur Reduktion der Einstrahlung. Hierzu eignen sich besonders bevorzugt durch räumlich verschiebbare oder hinsichtlich ihrer Transparenz variable optische Abschwächer, Blenden, Umlenkspiegel oder Filter.

Dies kann unter anderem vorteilhafterweise durch Variation der Fokusposition infolge einer Veränderung der Ausrichtung von Spiegeln oder Spiegelfeldern, so genannter Heliostatfelder erreicht werden. Dies ist wesentlich leichter zu realisieren als die Verschiebung des meist sehr schweren Reaktors.

In einer ersten Reaktionskammer stellt mann eine Temperatur im Bereich von 500 °C bis 900 °C und in einer zweiten Reaktionskammer eine Temperatur in einem Bereich von 1000 °C bis 1400 °C ein, um beispielsweise so bei einer besonders niedrigen Temperatur die Wasserstofferzeugung in einer ersten Reaktionskammer und gleichzeitig die Regeneration in einer zweiten Reaktionskammer durchzuführen.

Der fixierte Reaktionspartner in beiden Reaktionskammern umfasst Zinkoxide und/oder Manganoxide und/oder Lanthanoxide und/oder Oxide der generellen Formel Mₓ²⁺Zn₁₋ₓ²⁺Fe₂O₄, wobei M ein zweiwertiges Metallion ausgewählt aus der Gruppe Mg, Ca, Mn, Fe, Co, Ni, Cu, Zn, Sr, Sn, Ba, Cd oder Pb ist, und/oder Mischungen dieser Oxide, da diese besonders effizient bei der Wasserspaltung einsetzbar sind, wobei x eine Zahl in einem Bereich von 1 bis 5, insbesondere 2 bis 3 ist.

Man setzt die chemische Verbindung mit Redoxeigenschaften als Beschichtung einer hitzebeständigen keramischen Trägerstruktur ein. Durch den Einsatz einer Trägerstruktur muss die chemische Verbindung mit Redoxeigenschaften nur in einer dünnen Schicht in den Reaktionskammern vorliegen.

Man setzt bevorzugt eine Trägerstruktur mit konus-, halbkugel- oder paraboloidförmiger Form ein, da hierdurch Streustrahlung der Strahlungsquelle in der Reaktionskammer optimal genutzt werden kann.

Neben den fixierten Reaktionspartnern werden auch mobile Reaktionspartner eingesetzt.

Mindestens einer, besonders bevorzugt alle, der mobilen Reaktionspartner sind im erfindungsgemäßen Verfahren gasförmig. Dadurch kann dieser Reaktionspartner besonders leicht den Reaktionskammern zugeführt werden. Ausserdem ist vorzugsweise mindestens eines, besonders bevorzugt alle, der mobilen Reaktionsprodukte gasförmig, da diese ebenso einfach aus den Reaktionskammern wieder abgeführt werden können.

Die Erfindung betrifftalso ein Verfahren, Wasserdampf in einem mehrstufigen Prozess durch Nutzung konzentrierter Strahlung thermisch zu spalten und demzufolge solaren Wasserstoff zu erzeugen.

Mit dem erfindungsgemäßen Verfahren kann Wasserdampf durch konzentriertes Sonnenlicht thermisch gespalten und dadurch Wasserstoff erzeugt werden. Dies bildet die Grundlage zur Entwicklung des erfindungsgemäßen Verfahrens, mit dem Wasserstoff solarthermisch erzeugt werden kann. Im Gegensatz zur direkten thermischen Wasserspaltung, die erst bei einigen Tausend Grad Celsius erfolgt, wird hier in einem zweistufigen Kreisprozess vorzugsweise bei Temperaturen in einem Bereich von 800°C bis 1200°C Wasserstoff aus Wasserdampf erzeugt. Im Kreis geführt wird beispielsweise ein Metalloxid-System, das Sauerstoff aus Wassermolekülen abspalten und reversibel in seine Kristallstruktur einbinden kann.

| | |
|---|---|
| Reaktion 1: Spaltung | *MO_{red}* + *H₂O* → *MOₒₓ* + *H₂* |
| Reaktion 2: Regenerierung | *MOₒₓ* → *MO_{red}* + *O₂* |

Es werden vorzugsweise Metalloxide (MO) mit unterschiedlicher Dotierung eingesetzt, die cyclisch oxidiert und reduziert werden. Im ersten Schritt wird der am Metalloxid vorbeiströmende heiße Wasserdampf durch Bindung des Sauerstoffs an das angeregte Metalloxidgitter bei Temperaturen vorzugsweise in einem Bereich von 550 bis 850 °C gespalten und Wasserstoff freigesetzt. Im zweiten Schritt wird bei Temperaturen vorzugsweise in einem Bereich von 1050 bis 1350 °C der zuvor in das Gitter eingebaute Sauerstoff wieder abgegeben und das Metalloxid regeneriert beziehungsweise wieder in den energiereicheren Zustand reduziert. Diese Temperaturen gelten bevorzugt für Ferrite oder Eisenmischoxide. Besonders bevorzugt kann die Reaktionstemperatur vorteilhafterweise in einem Bereich von 600 °C bis 800 °C und die Regenerationstemperatur in einem Bereich von 1000bis 1200 °C liegen. Insgesamt wird also mit Hilfe des Metalloxids Wasser in seine Elemente gespalten. Die verwendeten Metalloxide sind vorteilhafterweise Mischoxide, besonders bevorzugt mit Zink dotierte Ferrite.

Eine wichtige Innovation des Verfahrens ist die Kombination einer keramischen Träger- und Absorberstruktur, die mit konzentrierter Sonnenstrahlung auf hohe Temperaturen erhitzt werden kann, mit einem Redoxsystem, das in der Lage ist, beispielsweise Wasser reversibel zu spalten. Dazu werden vorzugsweise poröse Wabenstrukturen, die als Strahlungsabsorber fungieren, mit Ferriten beschichtet. Dies beinhaltet Vorteile gegenüber vergleichbaren Verfahren, da hier der komplette Prozess in einem einzigen Konverter durchgeführt werden kann. Somit müssen keine Feststoffe im Kreis geführt werden und durch die Bindung des Sauerstoffs an das Metalloxid reduziert sich die Produktseparierung auf eine Gastrennung. Zudem ermöglicht es dieses System, den Wasserspaltungsprozess bei deutlich niedrigeren, materialtechnisch beherrschbaren Temperaturen ablaufen zu lassen. Vorzugsweise wird das Metalloxid zurückgewonnen, so dass lediglich Wasser verbraucht wird. All diese technischen Vorteile eröffnen auch ökonomische Vorteile gegenüber anderen Verfahren zur Wasserstoffgewinnung.

Die mit Metalloxid beschichtete keramische Struktur bildet vorteilhafterweise das Kernstück in einem Receiver-Reaktor. Durch Ankopplung an eine konzentrierende Solaranlage (vorzugsweise einen Solarturm) wird die Struktur durch die einfallende konzentrierte Sonnenstrahlung auf die dafür notwendige Temperatur gebracht. Die Reaktionen finden auf der Oberfläche der beschichteten Keramik statt. Der Reaktor ist vorzugsweise in eine Kleinanlage zur Überprüfung und Optimierung des Betriebsverhaltens während der Wasserspaltung beziehungsweise Regeneration integriert. Diese Anlage umfasst vorzugsweise Armaturen und Massenstromregler zur Zufuhr der benötigten Gase, ein Wasserdampfdosiersystem, Messsysteme für Druck und Temperatur, Produktgasbehandlung, sowie die Datenerfassung und Steuerung. Die Analyse der Konzentrationen an produziertem Wasserstoff beziehungsweise an freigesetztem Sauerstoff erfolgt vorzugsweise durch ein Massenspektrometer.

Für eine effiziente Nutzung des Reaktors ist es vorzugsweise erforderlich, dass ein andauernder Betrieb zur Erzeugung des Produktes Wasserstoff stattfinden kann. Da zwei Reaktionen mit unterschiedlichen Bedingungen durchzuführen sind, muss ein zyklischer Wechsel der Reaktionsbedingungen beziehungsweise Gase sowie der benötigten Energie (Temperatur) erfolgen.

Erfindungsgemäss wird der Wasserdampf bei einer Temperatur im Bereich von 500 °C bis 900°C gespalten und das Metalloxid bei einer Temperatur in einem Bereich von 1000 °C bis 1400 °C regeneriert. Bei üblicher thermischen Wasserspaltung mussten bislang Temperaturen von einigen tausend Grad, mindestens jedoch 2000°C eingesetzt werden. Der niedrigere Temperaturbereich ist materialtechnisch und verfahrenstechnisch leichter handhabbar und reduziert die Kosten für das Verfahren erheblich.

Bevorzugt wird die der Erfindung zugrunde liegende Aufgabe daher gelöst durch ein Verfahren zur quasikontinuierlichen Herstellung von Wasserstoff aus Wasserdampf an einer Oberfläche eines Metalloxids und anschließender Regeneration der Oberfläche.

Es ist zur quasikontinuierlichen Herstellung von Wasserstoff aus Wasserdampf an einer Oberfläche eines Metalloxids und anschließender Regeneration der Oberfläche von Vorteil, wenn man eine quasikontinuierliche Synthese in mindestens zwei Reaktionskammern durchführt, wodurch Wasserdampf zu Wasserstoff umgesetzt werden kann und zeitgleich eine weitere Reaktionskammer regeneriert werden kann, um gleich anschließend wieder Wasserdampf zu Wasserstoff umzusetzen. Durch dieses quasikontinuierliche Verfahren kann der thermische Herstellungsprozess von Wasserstoff erheblich vereinfacht werden.

So kann im erfindungsgemäßen Verfahren in einer Reaktorkammer die Wasserstoffsynthese durch Wasserspaltung und in einer weiteren Reaktorkammer die Regeneration des Metalloxids stattfinden. Im darauffolgenden Zyklus kann dann die regenerierte Reaktionskammer wieder neue Reaktionspartner aufnehmen. So kann Wasserstoff im Vergleich zum Stand der Technik kontinuierlich und einfach thermisch erzeugt werden.

In einer weiteren Ausführungsform wird die der Erfindung zu Grunde liegende Aufgabe gelöst durch einen Photoreaktorgemäss Anspruch 4.

Dies ist ein Reaktor zur thermischen Herstellung von Wasserstoff aus Wasserdampf an einer Oberfläche in einer gas-festphasigen Reaktion mit mindestens einem angeschlossenen Rohr, das einen Gasstrom von Eduktgasen in eine Reaktionskammer hinein und Produktgasen heraus ermöglicht und einer optischen Anordnung zur Eintragung von Sonnenlicht.

Im Reaktor ist das Metalloxid auf einer hitzebeständigen keramischen Trägerstruktur beschichtet. Diese Fixierung hat den Vorteil, dass das Metalloxid immer zur Verfügung steht und so optimal im Reaktor der Wärmequelle ausgesetzt werden kann. Durch die Fixierung des Metalloxids auf der Trägerstruktur muss das Metalloxid nicht mühsam über Trennverfahren zurückgewonnen werden. Vorteilhafterweise kann die für die Reaktionen notwendige Wärme auch aus der Trägerstruktur heraus zugeführt werden.

Besonders bevorzugt besteht die keramische Trägerstruktur aus einer porösen Wabenstruktur, weil poröse keramische Wabenstrukturen sich als besonders hitzebeständig herausgestellt haben. Poren im Sinne dieser Erfindung sind die durch die Wabenstruktur gegebenen Zwischenräume. Dies schließt nicht aus, dass das Material an sich vorteilhafterweise selbst eine Porosität in einem Bereich von 10 bis 60 % aufweist. Die Porosität ergibt sich aus dem Gewichtsverhältnis des tatsächlichen Gewichts zu dem Gewicht unter Annahme der theoretischen maximalen Dichte.

Vorteilhafterweise ist die keramische Trägerstruktur konus-, halbkugel- oder paraboloidförmig aufgebaut, um die Strahlung optimal auf das Metalloxid einzufangen. Hierdurch kann im Unterschied zu bekannten Formen (beispielsweise Zylinderform) auch Randstrahlung besser eingefangen werden.

Die Reaktionskammer ist vorteilhafterweise mit einem transparenten Fenster ausgestattet, da hierdurch die Lichtquelle außerhalb des eigentlichen Reaktors anbeordnet werden kann.

Vorteilhafterweise verlaufen zwischen Reaktionskammern und Energiequelle Rohre, die den Energiefluss, abschwächen, da hierdurch eine bessere Kontrolle der Reaktion ermöglicht wird.

Vorzugsweise enthalten die Rohre ein Fluid, da hierdurch der Wärmeaustausch individuell abgestimmt werden kann.

Der Reaktor ist vorteilhafterweise mit einem Mehr-Wege-Ventil versehen, um die Zufuhr der gasförmigen Edukte zu ermöglichen.

Vorzugsweise ist das Mehr-Wege-Ventil so gestaltet, dass die gasförmigen Produkte getrennt abgeführt werden können.

Der Reaktor ist vorteilhafterweise modular aus mindestens zwei Reaktionskammern aufgebaut, da hierdurch das oben beschriebene quasi-kontinuierliche Verfahren besonders leicht implementiert werden kann.

Hierbei werden vorzugsweise beide Reaktionskammern abwechselnd mit Wasserdampf oder Stickstoff versorgt, wobei die Schaltung so erfolgt, dass eine zeitlich konstante Wasserstoffherstellung erfolgt.

Im Folgenden wird anhand von Figuren ein Ausführungsbeispiel - der Konti-Reaktor - der Erfindung näher erläutert: Dieses Ausführungsbeispiel ist nicht dahingehend zu verstehen, dass dadurch der Schutzbereich der Erfindung darauf eingeschränkt wird.

Das erfindungsgemäße Verfahren der solar-thermochemischen Wasserspaltung auf Metalloxid-Basis zur kontinuierlichen Wasserstofferzeugung kann mit Hilfe des hier beschriebenen Designs eines geeigneten Receiver-Reaktors kontinuierlich durchgeführt werden.

Es zeigen:
Fig. 1 eine schematische Darstellung des Zeitablaufs verschiedener Reaktionen in verschiedenen Reaktionskammern im erfindungsgemäßen quasikontinuierlichen Verfahren
Fig. 2 eine perspektivische schematische Darstellung (vertikalhorizontaler Schnitt) des Konti-Reaktors nach der Erfindung,

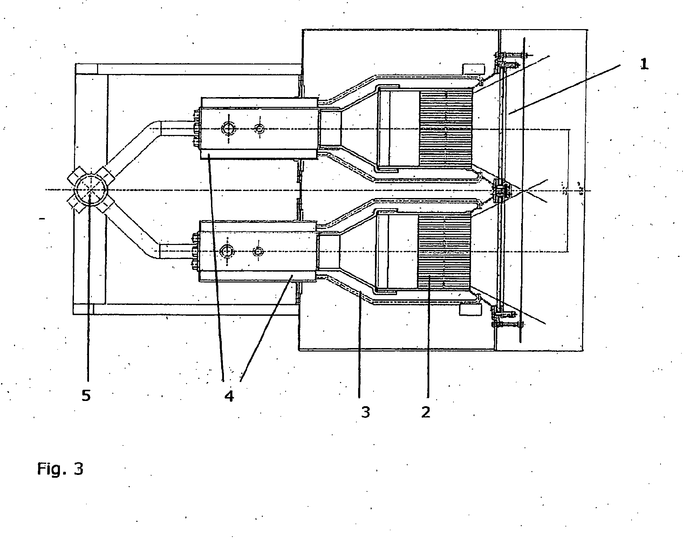

Fig. 3 einen horizontalen Schnitt durch den Reaktor,
Fig. 4 eine Darstellung des hitzebeständigen Vier-Wege-Ventils im Reaktor.

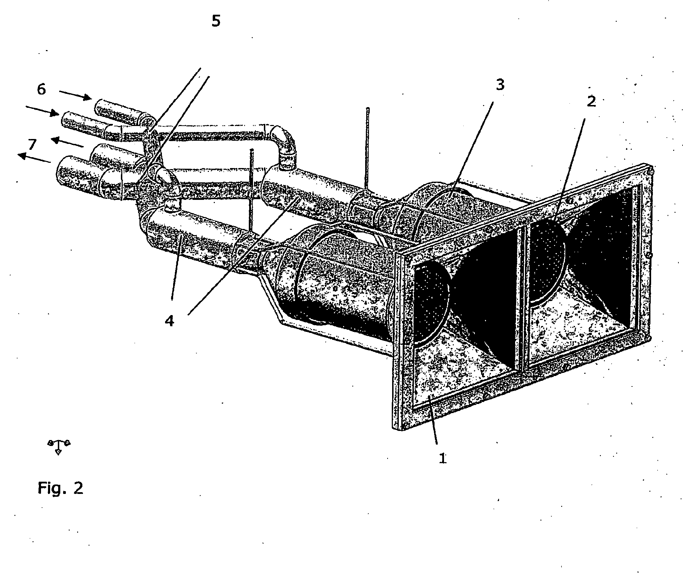

Fig. 2 zeigt den Receiver-Reaktor, wobei von der rechten Seite die konzentrierte Sonnenstrahlung auf die Apertur mit Quarz-Fenstern fällt (1). Die Leistung des einfallenden Lichts kann durch eine Blende eingestellt werden. Der Receiver-Reaktor basiert auf der schon beschriebenen Verbindung des Metalloxid-Redoxsystems mit einer Träger- und Absorberstruktur, die aus einem keramischen Monolithen mit wabenartiger Struktur besteht (2). Der Monolith ist mit dem Metalloxid beschichtet und in einem zylindrischen Gehäuse eingebaut (3). Die Wabenstruktur ermöglicht in einem direkt absorbierenden Receiver die Erzeugung hoher Temperaturen bei geringen Rückstrahlungsverlusten. Der Reaktor besteht aus einem modularen Zwei-Komponenten-System fest installierter wabenartiger Absorber. Zwei benachbarte, aber getrennte Reaktionskammern bilden eine minimale Anordnung von Modulen für die kontinuierliche Produktion von Wasserstoff. Die quadratische Apertur (1) erlaubt die Bildung großer und flexibler Receiver-Areale durch Aneinanderreihung einzelner Module. Ein Doppelrohr ist zum Vorheizen der zugeführten Gase Stickstoff und Wasserdampf durch Zurückgewinnung der Wärme des Produktgases vorgesehen (4).

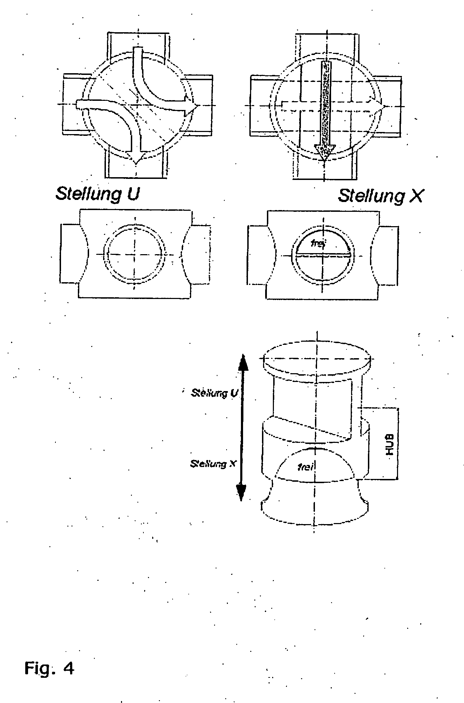

Der Betrieb des Konti-Reaktors beruht auf der gleichzeitigen Nutzung beider Module. Während in einer der Reaktionskammern Wasser gespalten wird, findet in der anderen die Regenerierung statt. Nach Beendigung der Reaktionen wird durch Wechsel der Gaszufuhr das regenerierte Modul umgeschaltet zur Spaltung und zugekehrt. Voraussetzung für diesen kontinuierlichen Betrieb und die Wasserstofferzeugung ist die getrennte Zuleitung von Stickstoffgas, das als Trägergas beziehungsweise Spülgas eingesetzt wird, sowie Wasserdampf (6). Außerdem sind gesonderte Leitungen für die Produkte der Spaltung einerseits und für das sauerstoffhaltige Spülgas der Regeneration andererseits notwendig (7). Dies wird durch Vier-Wege-Ventile (5 beziehungsweise 5a) ermöglicht, die jeweils nach Beendigung eines Reaktionsschrittes umgeschaltet werden. Eines dieser Ventile (5) muss hohen Temperaturen bis zu 600°C standhalten. Fig. 4 zeigt die Stellungen dieses Ventils.

Die beiden Schritte des Prozesses werden im selben Reaktor auf verschiedenen Temperaturniveaus mit unterschiedlichem Wärmebedarf durchgeführt. Die Regenerierung ist endotherm und verläuft vorteilhafterweise in einem Temperaturbereich von 1100 bis 1200°C. Die Wasserdampfspaltung ist leicht exotherm und findet bei 800°C statt. Deshalb benötigt ein Teil der Module (Regeneration) eine höhere solare Flussdichte als der zweite Teil für die Wasserspaltung, die nur wenig Energie zur Kompensation von Wärmeverlusten beansprucht. Somit ist ein zyklischer Wechsel der Bestrahlungsstärke erforderlich, wenn der Zyklus von Regeneration zu Spaltung beziehungsweise umgekehrt umgeschaltet wird. Dafür ist ein Wechsel der Spiegelfokussierung zwischen zwei gleichen Brennpunkten durch eine geeignete Adjustierung der konzentrierenden Spiegel der Solaranlage vorgesehen. Die periodische Veränderung der Bestrahlungsstärke wird durch zeitlich veränderliche optische Bauteile erreicht, beispielsweise optische Gitter als Abschwächer, Umlenkspiegel oder halbdurchlässige Spiegel. Ein solches Bauteil ist beweglich und befindet sich vor einer der beiden Aperturen. Bei einem Wechsel des zugeführten Gases kann dessen Position entsprechend umgeschaltet werden. Ebenso möglich, aber technisch aufwändiger ist eine zeitliche Veränderung der Receiverposition zwischen Orten unterschiedlicher Einstrahlungsintensität.

## Patentansprüche

1. Verfahren zur quasikontinuierlichen thermischen Herstellung von Wasserstoff aus Wasserdampf durch Anlagerung von Sauerstoff an einen Reaktionspartner und Freisetzung von Wasserstoff und Regeneration des Reaktionspartners bei höherer Temperatur und Freisetzung von gebundenem Sauerstoff, **dadurch gekennzeichnet, dass** man die Freisetzung von Wasserstoff und die Regeneration des Reaktionspartners bei höherer Temperatur und Freisetzung von gebundenem Sauerstoff in sequentiellen reversiblen Schritten in wenigstens zwei strahlungsbeheizten Reaktionskammern parallel betreibt, in denen jeweils wenigstens ein Reaktionspartner, ausgewählt aus der Gruppe umfassend Zinkoxide und/oder Manganoxide und/oder Lanthanoxide und/oder Oxide der generellen Formel Mₓ²⁺Zn₁₋ₓ²⁺Fe₂O₄, wobei M ein zweiwertiges Metallion, ausgewählt aus der Gruppe Mg, Ca, Mn, Fe, Co, Ni, Cu, Zn, Sr, Sn, Ba, Cd oder Pb ist,
wobei
x eine Zahl in einem Bereich von 1 bis 5 ist,
und/oder Mischungen dieser Oxide, örtlich fixiert und als Beschichtung auf einer keramischen Trägerstruktur vorgesehen ist, wobei man mit Hilfe optischer Anordnungen Sonnenlicht in die Reaktionskammern einstrahlt und zyklisch abwechselnde Reaktionsbedingungen in den Reaktionskammern durch einen zyklischen Wechsel der Temperaturen der Reaktionskammern durch Veränderung der Reaktionskammern relativ zur Strahlungsquelle einstellt, wobei man in einer ersten Reaktionskammer eine Temperatur im Bereich von 500 °C bis 900 °C und in einer zweiten Reaktionskammer eine Temperatur in einem Bereich von 1000 °C bis 1400 °C einstellt..

2. Verfahren gemäß Anspruch 1, **dadurch gekennzeichnet, dass** x eine Zahl im Bereich von 2 bis 3 ist.

3. Verfahren gemäß Anspruch 1, **dadurch gekennzeichnet, dass** man eine Trägerstruktur mit konus-, halbkugel-, zylinder- oder paraboloidförmiger Form einsetzt.

4. Photoreaktor mit wenigstens zwei strahlungsbeheizten Reaktionskammern und mit einer optischen Anordnung zur Eintragung von Sonnenlicht in die Reaktionskammern zur thermischen Herstellung von Wasserstoff aus Wasserdampf durch Anlagerung von Sauerstoff an einen Reaktionspartner und Freisetzung von Wasserstoff und Regeneration des Reaktionspartners bei höherer Temperatur und Freisetzung von gebundenem Sauerstoff an einer Oberfläche in einer gasfestphasigen Reaktion mit einem angeschlossenen Rohr, das einen Gasstrom von Eduktgasen in die Reaktionskammern hinein und Produktgase heraus ermöglicht
wobei in den Reaktionskammern **der Reaktionspartner**, ausgewählt aus der Gruppe umfassend Zinkoxide und/oder Manganoxide und/oder Lanthanoxide und/oder Oxide der generellen Formel Mₓ²⁺Zn₁₋ₓ ²⁺Fe₂O₄, wobei M ein zweiwertiges Metallion, ausgewählt aus der Gruppe Mg, Ca, Mn, Fe, Co, Ni, Cu, Zn, Sr, Sn, Ba, Cd oder Pb ist,
wobei
x eine Zahl in einem Bereich von 1 bis 5 ist,
und/oder Mischungen dieser Oxide, örtlich fixiert und als Beschichtung auf einer keramischen Trägerstruktur vorgesehen ist, wobei die Reaktionskammern zur Variation der Heizleistung relativ zur Strahlungsquelle veränderbar sind, so dass die erste Reaktionskammer eine Temperatur im Bereich von 500 °C bis 900 °C und eine zweite Reaktionskammer eine Temperatur in einem Bereich von 1000 °C bis 1400 °C aufweist.

## Claims

1. A process for the quasi-continuous thermal production of hydrogen from water vapor by associating oxygen to a reaction partner to release hydrogen and regenerating the reaction partner at a higher temperature to release bound oxygen, **characterized in that**:
said release of hydrogen and regeneration of the reaction partner at a higher temperature to release bound oxygen are performed in sequential reversible steps in at least two radiation-heated reaction chambers in parallel, in each of which at least one reactant selected from the group comprising zinc oxides and/or manganese oxides and/or lanthanum oxides and/or oxides of general formula Mₓ²⁺Zn₁₋ₓ²⁺Fe₂O₄, wherein M is a divalent metal ion selected from the group of Mg, Ca, Mn, Fe, Co, Ni, Cu, Zn, Sr, Sn, Ba, Cd or Pb,
wherein
x is a number within a range of from 1 to 5;
and/or mixtures of such oxides is locally fixed and provided as a coating on a ceramic support structure, wherein sunlight is supplied to the reaction chambers by means of optical systems, and cyclically alternating reaction conditions in the reaction chambers are provided by a cyclic change of the temperatures of the reaction chambers by changing the reaction chambers relative to the radiation source, wherein a temperature within a range of from 504 °C to 900 °C is set in a first reaction chamber, and a temperature within a range of from 1000 °C to 1400 °C is set in a second reaction chamber.

2. The process according to claim 1, **characterized in that** x is a number within a range of from 2 to 3.

3. The process according to claim 1, **characterized in that** a support structure having a conical, hemispherical, cylindrical or paraboloid shape is employed.

4. A photoreactor comprising at least two radiation-heated reaction chambers and an optical system for supplying sunlight to the reaction chambers, for thermally producing hydrogen from water vapor by associating oxygen to a reaction partner to release hydrogen and regeneration of the reaction partner at a higher temperature to release bound oxygen at a surface in a gas-solid phase reaction with a connected tube that enables gas flows of educt gases into the reaction chambers and of product gases out of them;
wherein in the reaction chambers said reactant selected from the group comprising zinc oxides and/or manganese oxides and/or lanthanum oxides and/or oxides of general formula Mₓ²⁺Zn₁₋ₓ²⁺Fe₂O₄, wherein M is a divalent metal ion selected from the group of Mg, Ca, Mn, Fe, Co, Ni, Cu, Zn, Sr, Sn, Ba, Cd or Pb,
wherein
x is a number within a range of from 1 to 5;
and/or mixtures of such oxides is locally fixed and provided as a coating on a ceramic support structure, wherein the reaction chambers can be changed relative to the radiation source to vary the heating power, so that the first reaction chamber has a temperature within a range of from 500 °C, to 900 °C, and a second reaction chamber has a temperature within a range of from 1000 °C to 1400 °C.

## Revendications

1. Procédé pour la production thermique, quasi continue d'hydrogène à partir de vapeur d'eau par l'association d'oxygène à un réactif en libérant de l'hydrogène et la régénération du réactif à température élevée en libérant de l'oxygène lié, **caractérisé en ce que** l'on effectue ladite libération d'hydrogène et ladite régénération du réactif à température élevée en libérant de l'oxygène lié en des étapes réversibles séquentielles dans au moins deux chambres de réaction chauffées par rayonnement en parallèle, dans chacune desquelles au moins un réactif choisi dans le groupe consistant en des oxydes de zinc et/ou des oxydes de manganèse et/ou des oxydes de lanthane et ou des oxydes répondant à la formule générale Mₓ²⁺Zn₁₋ₓ²⁺Fe₂O₄, où M est un ion métallique divalent choisi dans le groupe consistant en Mg, Ca, Mn, Fe, Co, Ni, Cu, Zn, Sr, Sn, Ba, Cd ou Pb,
où x est un nombre compris entre 1 et 5,
et/ou des mélanges des tels oxydes est fixé localement et procuré comme revêtement sur une structure de support céramique, dans lequel la lumière du soleil est irradiée dans les chambres de réaction au moyen de systèmes optiques, et des conditions de réaction se modifiant cycliquement dans les chambres de réaction sont ajustées par une modification cyclique des températures des chambres de réaction par changement des chambres de réaction relativement à la source du rayonnement, dans lequel une température comprise entre 500 °C et 900 °C est ajustée dans une première chambre de réaction, et une température comprise entre 1000 °C et 1400 °C est ajustée dans une seconde chambre de réaction.

2. Procédé selon la revendication 1, **caractérisé en ce que** x est un nombre compris entre 2 et 3.

3. Procédé selon la revendication 1, **caractérisé en ce qu'**une structure de support ayant une forme conique, hémisphérique, cylindrique ou paraboloïde est employée.

4. Photoréacteur comprenant au moins deux chambres de réaction chauffées par rayonnement et un système optique pour introduite la lumière du soleil dans les chambres de réaction pour la production thermique d'hydrogène à partir de vapeur d'eau par l'association d'oxygène à un réactif en libérant de l'hydrogène et la régénération du réactif à température élevée en libérant de l'oxygène lié sur une surface dans une réaction en phase gazeuse-solide avec un tube raccordé rendant possible un courant de gaz éduits allant dans les chambres de réaction et un courant de gaz produits allant dehors,
dans lequel, dans les chambres de réaction, ledit réactif choisi dans le groupe consistant en des oxydes de zinc et/ou des oxydes de manganèse et/ou des oxydes de lanthane et ou des oxydes répondant à la formule générale Mₓ²⁺Zn₁₋ₓ²⁺Fe₂O₄, où M est un ion métallique divalent choisi dans le groupe consistant en Mg, Ca, Mn, Fe, Co, Ni, Cu, Zn, Sr, Sn, Ba, Cd ou Pb,
où x est un nombre compris entre 1 et 5,
et/ou des mélanges des tels oxydes est fixé localement et procuré comme revêtement sur une structure de support céramique, dans lequel les chambres de réaction peuvent être changées relativement à la source du rayonnement pour varier la puissance de chauffage, de telle manière que la première chambre de réaction ait une température comprise entre 500 °C, et 900 °C, et une seconde chambre de réaction ait une température comprise entre 1000 °C et 1400 °C.
